(19) Europäisches Patentamt
European Patent Office
Office européen des brevets

(11) **EP 4 039 721 A1**

(12) **EUROPEAN PATENT APPLICATION**
published in accordance with Art. 153(4) EPC

(43) Date of publication:
**10.08.2022 Bulletin 2022/32**

(21) Application number: **20872032.6**

(22) Date of filing: **23.09.2020**

(51) International Patent Classification (IPC):
***C08F 279/02*** (2006.01)    ***C08F 287/00*** (2006.01)
***C08L 51/04*** (2006.01)    ***H01M 4/13*** (2010.01)
***H01M 4/62*** (2006.01)

(52) Cooperative Patent Classification (CPC):
**C08F 279/02; C08F 287/00; C08L 51/04;**
**H01M 4/13; H01M 4/62;** Y02E 60/10; Y02P 70/50

(86) International application number:
**PCT/JP2020/035847**

(87) International publication number:
**WO 2021/065634 (08.04.2021 Gazette 2021/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2019 JP 2019180758**

(71) Applicant: **Zeon Corporation**
**Tokyo 100-8246 (JP)**

(72) Inventors:
• **AKABANE, Tetsuya**
**Tokyo 100-8246 (JP)**
• **KIDOKORO, Hiroto**
**Tokyo 100-8246 (JP)**

(74) Representative: **Parchmann, Stefanie**
**Maiwald Patentanwalts- und**
**Rechtsanwaltsgesellschaft mbH**
**Elisenhof**
**Elisenstraße 3**
**80335 München (DE)**

(54) **BINDER COMPOSITION FOR NONAQUEOUS SECONDARY BATTERY ELECTRODE, SLURRY COMPOSITION FOR NONAQUEOUS SECONDARY BATTERY ELECTRODE, NONAQUEOUS SECONDARY BATTERY ELECTRODE, AND NONAQUEOUS SECONDARY BATTERY**

(57) Provided is a binder composition for a non-aqueous secondary battery electrode with which it is possible to form a slurry composition for a non-aqueous secondary battery electrode having excellent stability and an electrode for a non-aqueous secondary battery having excellent peel strength after thermal drying. The binder composition for a non-aqueous secondary battery electrode contains a particulate polymer A and a particulate polymer B. The particulate polymer A includes: a backbone portion formed of a block copolymer that includes an aromatic vinyl monomer unit and an aliphatic conjugated diene monomer unit; and a graft portion. The particulate polymer B includes an aliphatic conjugated diene monomer unit in a proportion of 70.0 mass% or more and includes a graft portion.

EP 4 039 721 A1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed by, for example, applying a slurry composition having an electrode active material, a binder-containing binder composition, and so forth dispersed in a dispersion medium (solvent) onto a current collector and drying the applied slurry composition.

Particulate polymers that include aliphatic conjugated diene monomer units are conventionally used as binders contained in binder compositions.

For example, Patent Literature (PTL) 1 reports that an electrode that has excellent peel strength and can cause a secondary battery to display excellent cycle characteristics can be formed by using a binder composition that contains a particulate polymer including an aliphatic conjugated diene monomer unit in a proportion of not less than 70 mass% and not more than 95 mass% and a (meth)acrylic acid ester monomer unit in a proportion of not less than 1 mass% and not more than 30 mass%, and having a degree of swelling in electrolyte solution of not less than a factor of 1.2 and not more than a factor of 7.0.

CITATION LIST

Patent Literature

PTL 1: WO2017/141791A1

SUMMARY

(Technical Problem)

There are instances in which an electrode including an electrode mixed material layer is dried under heating (hereinafter, also referred to as "thermal drying") at a high temperature of 100°C, for example, with the aim of sufficiently removing water before the electrode is used in assembly of a secondary battery.

Studies carried out by the inventors have revealed that although an electrode produced using the binder composition of the conventional technique described above has good peel strength straight after production, there is room for improvement in terms of peel strength after thermal drying.

There is also room for improvement of the stability of a slurry composition that is produced using the binder composition of the conventional technique described above.

Accordingly, one object of the present disclosure is to provide a binder composition for a non-aqueous secondary battery electrode with which it is possible to form a slurry composition for a non-aqueous secondary battery electrode having excellent stability and an electrode for a non-aqueous secondary battery having excellent peel strength after thermal drying.

Another object of the present disclosure is to provide a slurry composition for a non-aqueous secondary battery electrode that has excellent stability and that can form an electrode for a non-aqueous secondary battery having excellent peel strength after thermal drying.

Another object of the present disclosure is to provide an electrode for a non-aqueous secondary battery that has excellent peel strength after thermal drying.

Another object of the present disclosure is to provide a non-aqueous secondary battery that includes this electrode for a non-aqueous secondary battery.

(Solution to Problem)

The inventors conducted diligent investigation with the aim of solving the problems set forth above. The inventors discovered that by using a binder composition containing both: a first particulate polymer that includes a backbone portion formed of a block copolymer including an aromatic vinyl monomer unit and an aliphatic conjugated diene monomer unit and that also includes a graft portion; and a second particulate polymer that includes an aliphatic conjugated diene monomer unit in a proportion that is not less than a specific value and that also includes a graft portion, it is possible to form a slurry composition for a non-aqueous secondary battery electrode having excellent stability and an electrode for a non-aqueous secondary battery having excellent peel strength after thermal drying, and, in this manner, completed the present disclosure.

Specifically, the present disclosure aims to advantageously solve the problems set forth above, and a presently disclosed binder composition for a non-aqueous secondary battery electrode comprises a particulate polymer A and a particulate polymer B, wherein the particulate polymer A includes: a backbone portion formed of a block copolymer that includes an aromatic vinyl monomer unit and an aliphatic conjugated diene monomer unit; and a graft portion, and the particulate polymer B includes an aliphatic conjugated diene monomer unit in a proportion of 70.0 mass% or more and includes a graft portion. By using a binder composition containing a particulate polymer A that includes a backbone portion formed of a block copolymer including an aromatic vinyl monomer unit and an aliphatic conjugated diene monomer unit and that also includes a graft portion and a particulate polymer B that includes an aliphatic conjugated diene monomer unit in a proportion that is not less than a specific value and that also includes a graft portion in this manner, it is possible to produce a slurry composition for a non-aqueous secondary battery electrode having excellent stability and form an electrode for a non-aqueous secondary battery having excellent peel strength after thermal drying.

Note that a "monomer unit" of a polymer referred to in the present disclosure is a "repeating unit derived from the monomer that is included in a polymer obtained using the monomer". Also note that the proportional content of a monomer unit in a polymer can be measured by a method described in the EXAMPLES section of the present specification.

In the presently disclosed binder composition for a non-aqueous secondary battery electrode, content of the particulate polymer A is preferably not less than 20.0 mass% and not more than 80.0 mass% when total content of the particulate polymer A and the particulate polymer B is taken to be 100 mass%. When the proportion constituted by the particulate polymer A among the total amount of the particulate polymers A and B is within the specific range set forth above, the stability of a slurry composition produced using the binder composition can be further increased, and the peel strength after thermal drying of an electrode formed using the binder composition can also be further increased. Moreover, when the proportion constituted by the particulate polymer A among the total amount of the particulate polymers A and B is within the specific range set forth above, it is possible to increase the injectability of electrolyte solution when a secondary battery is produced using an electrode that has been formed using the binder composition (hereinafter, also referred to as "electrolyte solution injectability of an electrode").

Note that the proportion constituted by the particulate polymer A among the total amount of the particulate polymers A and B can be measured by a method described in the EXAMPLES section of the present specification.

In the presently disclosed binder composition for a non-aqueous secondary battery electrode, proportional content of aromatic vinyl monomer units in the particulate polymer A is preferably not less than 10.0 mass% and not more than 50.0 mass%. When the proportional content of aromatic vinyl monomer units in the particulate polymer A is within the specific range set forth above, the peel strength after thermal drying of an electrode formed using the binder composition can be further increased.

In the presently disclosed binder composition for a non-aqueous secondary battery electrode, it is preferable that the block copolymer includes a block region formed of aromatic vinyl monomer units and that the block region has a weight-average molecular weight of 15,000 or more. When the block copolymer includes a block region formed of aromatic vinyl monomer units and when the weight-average molecular weight of the block region is not less than the specific value set forth above, the peel strength after thermal drying of an electrode formed using the binder composition can be further increased.

Note that the weight-average molecular weight of a block region formed of aromatic vinyl monomer units can be measured by a method described in the EXAMPLES section of the present specification.

In the presently disclosed binder composition for a non-aqueous secondary battery electrode, the graft portion of the particulate polymer A preferably includes a carboxy group-containing monomer unit. When the graft portion of the particulate polymer A includes a carboxy group-containing monomer unit, the stability of a slurry composition produced using the binder composition can be further increased.

In the presently disclosed binder composition for a non-aqueous secondary battery electrode, the particulate polymer A preferably has a volume-average particle diameter of not less than 0.1 $\mu$m and not more than 2.0 $\mu$m. When the volume-average particle diameter of the particulate polymer A is within the specific range set forth above, the peel strength after thermal drying of an electrode formed using the binder composition can be further increased, and the electrolyte solution injectability of the electrode can also be increased.

Note that the "volume-average particle diameter" referred to in the present disclosure can be measured using a method described in the EXAMPLES section of the present specification.

In the presently disclosed binder composition for a non-aqueous secondary battery electrode, cis-1,4-bonded monomer units are preferably included in a proportion of 90 mol% or more among aliphatic conjugated diene monomer units included in the particulate polymer B. When aliphatic conjugated diene monomer units included in the particulate polymer B include cis-1,4-bonded monomer units in a proportion that is not less than the specific value set forth above, the peel strength after thermal drying of an electrode formed using the binder composition can be further increased.

Note that the proportion of cis-1,4-bonded monomer units among aliphatic conjugated diene monomer units included in the particulate polymer B can be measured by a method described in the EXAMPLES section of the present specification.

In the presently disclosed binder composition for a non-aqueous secondary battery electrode, the graft portion of the particulate polymer B preferably includes either or both of a (meth)acrylic acid ester monomer unit and a nitrile group-containing monomer unit. When the graft portion of the particulate polymer B includes either or both of a (meth)acrylic acid ester monomer unit and a nitrile group-containing monomer unit in this manner, the stability of a slurry composition produced using the binder composition can be further increased, and the peel strength after thermal drying of an electrode formed using the binder composition can also be further increased.

In the presently disclosed binder composition for a non-aqueous secondary battery electrode, the particulate polymer B preferably has a volume-average particle diameter of not less than 0.6 $\mu$m and not more than 2.5 $\mu$m. When the volume-average particle diameter of the particulate polymer B is within the specific range set forth above, the peel strength after thermal drying of an electrode formed using the binder composition can be further increased, and the electrolyte solution injectability of the electrode can also be increased.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. A slurry composition that contains an electrode active material and any one of the binder compositions set forth above in this manner has excellent stability and can form an electrode having excellent peel strength after thermal drying.

Furthermore, the present disclosure aims to advantageously solve the problems set forth above, and a presently disclosed electrode for a non-aqueous secondary battery comprises an electrode mixed material layer formed using the slurry composition set forth above. An electrode that includes an electrode mixed material layer formed using the slurry composition set forth above has excellent peel strength after thermal drying.

Also, the present disclosure aims to advantageously solve the problems set forth above, and a presently disclosed non-aqueous secondary battery comprises the electrode for a non-aqueous secondary battery set forth above. As a result of including the electrode for a non-aqueous secondary battery set forth above that has excellent peel strength after thermal drying, the presently disclosed non-aqueous secondary battery has excellent battery characteristics such as cycle characteristics and high performance.

(Advantageous Effect)

According to the present disclosure, it is possible to provide a binder composition for a non-aqueous secondary battery electrode with which it is possible to form a slurry composition for a non-aqueous secondary battery electrode having excellent stability and an electrode for a non-aqueous secondary battery having excellent peel strength after thermal drying.

Moreover, according to the present disclosure, it is possible to provide a slurry composition for a non-aqueous secondary battery electrode that has excellent stability and that can form an electrode for a non-aqueous secondary battery having excellent peel strength after thermal drying.

Furthermore, according to the present disclosure, it is possible to provide an electrode for a non-aqueous secondary battery that has excellent peel strength after thermal drying.

Also, according to the present disclosure, it is possible to provide a non-aqueous secondary battery that includes this electrode for a non-aqueous secondary battery.

DETAILED DESCRIPTION

The following provides a detailed description of embodiments of the present disclosure.

The presently disclosed binder composition for a non-aqueous secondary battery electrode is a binder composition that is for use in production of a non-aqueous secondary battery and can be used, for example, in production of the presently disclosed slurry composition for a non-aqueous secondary battery electrode. The presently disclosed slurry composition for a non-aqueous secondary battery electrode can be used in formation of an electrode of a non-aqueous secondary battery and, in particular, can suitably be used in formation of a negative electrode of a non-aqueous secondary battery. The presently disclosed electrode for a non-aqueous secondary battery is formed from the presently disclosed slurry composition for a non-aqueous secondary battery electrode. The presently disclosed non-aqueous secondary battery includes the presently disclosed electrode for a non-aqueous secondary battery.

(Binder composition for non-aqueous secondary battery electrode)

The presently disclosed binder composition contains a particulate polymer A and a particulate polymer B and optionally further contains other components that can be compounded in an electrode of a secondary battery. In addition, the presently disclosed binder composition for a non-aqueous secondary battery electrode can further contain a solvent such as water. Features of the presently disclosed binder composition are that the particulate polymer A includes a backbone portion formed of a block copolymer including an aromatic vinyl monomer unit and an aliphatic conjugated diene monomer unit and also includes a graft portion, and that the particulate polymer B includes an aliphatic conjugated diene monomer unit in a proportion of 70.0 mass% or more and also includes a graft portion.

It is presumed that as a result of the particulate polymer A and the particulate polymer B both including a graft portion, surface contact between these two types of particulate polymers and between these two types of particulate polymers and other components is physically inhibited, which can inhibit formation of aggregates of the two types of particulate polymers and of the two types of particulate polymers with other components, and thus can improve the stability of a slurry composition produced using the binder composition. Moreover, a slurry composition having excellent stability has a low tendency for coating unevenness to occur when the slurry composition is applied onto a current collector in order to form an electrode mixed material layer, and thus an electrode having excellent peel strength even after thermal drying can be obtained.

Moreover, as a result of the particulate polymer A including not only an aliphatic conjugated diene monomer unit but also an aromatic vinyl monomer unit in the block copolymer constituting the backbone portion and as a result of the particulate polymer B including an aliphatic conjugated diene monomer unit in a proportion of 70.0 mass% or more, a balance of flexibility and rigidity of an electrode mixed material layer formed using the binder composition can be maintained well, and an electrode having excellent peel strength even after thermal drying can be obtained.

Furthermore, by using an electrode having excellent peel strength after thermal drying that has been formed using the presently disclosed binder composition, it is possible to cause a secondary battery to display excellent cycle characteristics.

Note that the term "thermal drying" as used in the present specification is also inclusive of thermal drying performed in a vacuum (reduced pressure) state (hereinafter, also referred to as "thermal vacuum drying"). An electrode that has been formed using the presently disclosed binder composition also has excellent peel strength after vacuum drying under heating at a high temperature of 100°C, for example (i.e., peel strength after thermal vacuum drying).

<Particulate polymer A>

The particulate polymer A is a component that functions as a binder and that, in an electrode mixed material layer formed using a slurry composition that contains the binder composition, holds components such as an electrode active material so that they do not detach from the electrode mixed material layer and enables adhesion of an electrode and a separator through the electrode mixed material layer.

Moreover, the particulate polymer A is water-insoluble particles. Note that when particles are referred to as "water-insoluble" in the present disclosure, this means that when 0.5 g of polymer is dissolved in 100 g of water at a temperature of 25°C, insoluble content is 90 mass% or more.

<<Structure and chemical composition>>

The particulate polymer A includes a backbone portion that is formed of a block copolymer including an aromatic vinyl monomer unit and an aliphatic conjugated diene monomer unit, and also includes a graft portion. More specifically, the particulate polymer A is a graft copolymer having a structure in which a graft portion is bonded to a backbone portion formed of a block copolymer that includes a block region formed of aromatic vinyl monomer units (hereinafter, also referred to simply as the "aromatic vinyl block region") and a block region formed of aliphatic conjugated diene monomer units (hereinafter, also referred to simply as the "aliphatic conjugated diene block region"). The aromatic vinyl block region is formed of only aromatic vinyl monomer units. The aliphatic conjugated diene block region is preferably formed of only aliphatic conjugated diene monomer units but, besides aliphatic conjugated diene monomer units, may include an alkylene structural unit.

Note that the block copolymer constituting the backbone portion may include other repeating units besides an aromatic vinyl monomer unit, an aliphatic conjugated diene monomer unit, and an alkylene structural unit.

The aromatic vinyl block region and the aliphatic conjugated diene block region are adjacent to each other in the block copolymer constituting the backbone portion. Moreover, the copolymer constituting the backbone portion may include one aromatic vinyl block region or a plurality of aromatic vinyl block regions. Likewise, the block copolymer constituting the backbone portion may include one aliphatic conjugated diene block region or a plurality of aliphatic conjugated diene block regions. Furthermore, the block copolymer constituting the backbone portion may include other regions besides the aromatic vinyl block region and the aliphatic conjugated diene block region.

The particulate polymer A including the backbone portion that is formed of a block copolymer including an aromatic vinyl block region and an aliphatic conjugated diene block region has both rigidity and flexibility, and thus can impart excellent peel strength after thermal drying to an electrode formed using the binder composition.

[Aromatic vinyl block region]

The aromatic vinyl block region is a region that essentially only includes aromatic vinyl monomer units as repeating units as previously described.

A single aromatic vinyl block region may be composed of one type of aromatic vinyl monomer unit or may be composed of a plurality of types of aromatic vinyl monomer units, but is preferably composed of one type of aromatic vinyl monomer unit.

Moreover, a single aromatic vinyl block region may include a coupling moiety (i.e., aromatic vinyl monomer units composing a single aromatic vinyl block region may be linked via a coupling moiety).

In a case in which the block copolymer constituting the backbone portion includes a plurality of aromatic vinyl block regions, the types and proportions of aromatic vinyl monomer units composing these aromatic vinyl block regions may be the same or different for each of the aromatic vinyl block regions, but are preferably the same.

Examples of aromatic vinyl monomers that can form a constituent aromatic vinyl monomer unit of the aromatic vinyl block region in the block copolymer constituting the backbone portion include styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one of these aromatic vinyl monomers is used individually. Of these aromatic vinyl monomers, styrene is preferable.

The proportion constituted by aromatic vinyl monomer units in the particulate polymer A when the amount of all repeating units in the particulate polymer A (total of repeating units in backbone portion and graft portion of particulate polymer A) is taken to be 100 mass% is preferably 10.0 mass% or more, more preferably 12.0 mass% or more, and even more preferably 15.0 mass% or more, and is preferably 50.0 mass% or less, more preferably 40.0 mass% or less, and even more preferably 35.0 mass% or less. Note that the proportion constituted by aromatic vinyl monomer units in the particulate polymer A is normally the same as the proportion constituted by the aromatic vinyl block region in the particulate polymer A.

When the proportion constituted by aromatic vinyl monomer units in the particulate polymer A is within any of the specific ranges set forth above, the rigidity of an electrode mixed material layer formed using the binder composition can be suitably improved, and the peel strength after thermal drying of an electrode can be further increased.

The weight-average molecular weight of the aromatic vinyl block region is preferably 15,000 or more, and more preferably 20,000 or more, and is preferably 40,000 or less. When the weight-average molecular weight of the aromatic vinyl block region is not less than any of the lower limits set forth above, the peel strength after thermal drying of an electrode formed using the binder composition can be further increased. On the other hand, when the weight-average molecular weight of the aromatic vinyl block region is not more than the upper limit set forth above, the rigidity of an electrode mixed material layer formed using the binder composition can be suitably improved, and the peel strength after thermal drying of an electrode can be further increased.

[Aliphatic conjugated diene block region]

The aliphatic conjugated diene block region is a region that essentially includes aliphatic conjugated diene monomer units as repeating units as previously described.

A single aliphatic conjugated diene block region may be composed of one type of aliphatic conjugated diene monomer unit or may be composed of a plurality of types of aliphatic conjugated diene monomer units.

Moreover, a single aliphatic conjugated diene block region may include a coupling moiety (i.e., aliphatic conjugated diene monomer units composing a single aliphatic conjugated diene block region may be linked via a coupling moiety).

In a case in which the block copolymer constituting the backbone portion includes a plurality of aliphatic conjugated diene block regions, the types and proportions of aliphatic conjugated diene monomer units composing these aliphatic conjugated diene block regions may be the same or different for each of the aliphatic conjugated diene block regions.

Conjugated diene compounds having a carbon number of 4 or more such as 1,3-butadiene, isoprene, 2,3-dimethyl-1,3-butadiene, and 1,3-pentadiene may be used for a constituent aliphatic conjugated diene monomer unit of the aliphatic conjugated diene block region in the block copolymer constituting the backbone portion. One of these conjugated diene compounds may be used individually, or two or more of these conjugated diene compounds may be used in combination. Of these conjugated diene compounds, 1,3-butadiene and isoprene are preferable from a viewpoint of further increasing the peel strength after thermal drying of an electrode, and 1,3-butadiene is particularly preferable.

Aliphatic conjugated diene monomer units composing the aliphatic conjugated diene block region in the block copolymer constituting the backbone portion may be cross-linked. In other words, aliphatic conjugated diene monomer units composing the aliphatic conjugated diene block region may include a structural unit obtained through cross-linking of an aliphatic conjugated diene. The inclusion of a structural unit obtained through cross-linking of an aliphatic conjugated diene in the aliphatic conjugated diene block region can increase the electrolyte solution injectability of an electrode formed using the binder composition.

A structural unit obtained through cross-linking of an aliphatic conjugated diene monomer unit can be introduced through cross-linking of the block polymer constituting the backbone portion.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

The proportion constituted by aliphatic conjugated diene monomer units in the particulate polymer A when the amount of all repeating units in the particulate polymer A (total of repeating units in backbone portion and graft portion of particulate polymer A) is taken to be 100 mass% is preferably 50.0 mass% or more, more preferably 55.0 mass% or more, and even more preferably 60.0 mass% or more, and is preferably 90.0 mass% or less, more preferably 87.5 mass% or less, and even more preferably 85.0 mass% or less. When the proportion constituted by aliphatic conjugated diene monomer units in the particulate polymer A is within any of the specific ranges set forth above, the flexibility of an electrode mixed material layer formed using the binder composition can be suitably improved, and the peel strength after thermal drying of an electrode can be further increased. Note that the "aliphatic conjugated diene monomer units" referred to above are inclusive of structural units obtained through aliphatic conjugated diene cross-linking.

In addition, the aliphatic conjugated diene block region may include an alkylene structural unit. An alkylene structural unit is a repeating unit that is composed of only an alkylene structure represented by a general formula $-C_nH_{2n}-$ (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which an alkylene structural unit is introduced into the aliphatic conjugated diene block region. For example, a method in which a polymer that includes an aliphatic conjugated diene block region is hydrogenated so as to convert an aliphatic conjugated diene monomer unit included in the aliphatic conjugated diene block region to an alkylene structural unit may be adopted.

[Graft portion]

The particulate polymer A includes a graft portion bonded to the backbone portion that is formed of a block copolymer including an aromatic vinyl monomer unit and an aliphatic conjugated diene monomer unit. More specifically, the particulate polymer A has a structure in which a polymer constituting a graft portion is bonded to an aliphatic conjugated diene block region of a backbone portion that is formed of the above-described block copolymer including an aromatic vinyl block region and an aliphatic conjugated diene block region.

Examples of repeating units that may be included in the graft portion of the particulate polymer A include an acidic group-containing monomer unit, a (meth)acrylic acid ester monomer unit, and an aromatic vinyl monomer unit.

Examples of acidic group-containing monomers that can form an acidic group-containing monomer unit include monomers having an acidic group such as carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Note that an acid anhydride that produces a carboxy group through hydrolysis can also be used as a carboxy group-containing monomer.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)allyl" is used to indicate "allyl" and/or "methallyl", and "(meth)acryloyl" is used to indicate "acryloyl" and/or "methacryloyl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of aromatic vinyl monomers that can form an aromatic vinyl monomer unit include the aromatic vinyl monomers that were previously described in the "Aromatic vinyl block region" section.

One of the various monomers described above that can be used to form a repeating unit included in the graft portion of the particulate polymer A may be used individually, or two or more of these monomers may be used in combination. From a viewpoint of further increasing the stability of a slurry composition produced using the binder composition, it is preferable that an acidic group-containing monomer is used as a monomer for forming a repeating unit included in the graft portion of the particulate polymer A, more preferable that a carboxy group-containing monomer is used, even more preferable that methacrylic acid, itaconic acid, or acrylic acid is used, and particularly preferable that methacrylic acid is used.

No specific limitations are placed on the method by which the graft portion is introduced to the block copolymer constituting the backbone portion. For example, the specific block copolymer described above may be produced and then this block copolymer may be used as a backbone portion in graft polymerization of an acidic group-containing monomer such as described above or the like by a known method to thereby obtain a graft copolymer having a structure in which a polymer of a graft portion is bonded to an aliphatic conjugated diene monomer unit of the block copolymer constituting the backbone portion.

The proportion constituted by monomer units composing the graft portion in the particulate polymer A when the amount of all repeating units in the particulate polymer A (total of repeating units in backbone portion and graft portion of particulate polymer A) is taken to be 100 mass% is preferably 0.1 mass% or more, more preferably 0.2 mass% or more, and even more preferably 0.5 mass% or more, and is preferably 30.0 mass% or less, more preferably 15.0 mass% or less, and even more preferably 5.0 mass% or less.

When the proportion constituted by monomer units composing the graft portion is not less than any of the lower limits set forth above, the stability of a slurry composition containing the binder composition can be further increased. Moreover, when the proportion constituted by monomer units composing the graft portion is not more than any of the upper limits set forth above, the peel strength after thermal drying of an electrode formed using the binder composition can be further increased.

<<Volume-average particle diameter>>

The volume-average particle diameter of the particulate polymer A is preferably 0.10 $\mu$m or more, more pref-

erably 0.18 μm or more, even more preferably 0.20 μm or more, and further preferably 0.25 μm or more, and is preferably 2.00 μm or less, more preferably 1.20 μm or less, even more preferably 1.00 μm or less, and further preferably 0.80 μm or less. When the volume-average particle diameter of the particulate polymer A is not less than any of the lower limits set forth above, the electrolyte solution injectability of an electrode formed using a slurry composition that contains the binder composition can be increased. Moreover, when the volume-average particle diameter of the particulate polymer A is not more than any of the upper limits set forth above, the specific surface area of the particulate polymer A increases, adhesive ability that can be displayed by the particulate polymer A increases, and, as a result, the peel strength after thermal drying of an electrode formed using the binder composition can be further increased.

<<Production method of particulate polymer A>>

The above-described particulate polymer A can be produced, for example, through a step of block polymerizing monomers such as an aromatic vinyl monomer and an aliphatic conjugated diene monomer described above in an organic solvent to obtain a solution of a block copolymer constituting a backbone portion (block copolymer solution production step), a step of adding water to the obtained block copolymer solution and performing emulsification to form particles of the block copolymer (emulsification step), and a step of performing graft polymerization with respect to the particles of the block copolymer to obtain a water dispersion of a particulate polymer A that has a graft portion bonded to the block copolymer constituting the backbone portion (grafting step).

Note that the grafting step may be performed before the emulsification step in production of the particulate polymer A. In other words, the particulate polymer may be produced by implementing a step of performing graft polymerization with respect to the block copolymer contained in the obtained block copolymer solution after the block polymer solution production step to obtain a solution of a polymer having a graft portion bonded to the block copolymer constituting the backbone portion (grafting step) and subsequently implementing a step of adding water to the solution of that polymer and performing emulsification to form particles of the specific polymer and obtain a water dispersion of a particulate polymer A (emulsification step).

In addition, other steps besides the above-described block copolymer solution production step, emulsification step, and grafting step may be included in production of the particulate polymer A.

[Block copolymer solution production step]

No specific limitations are placed on the method of block copolymerization in the block copolymer solution production step. For example, a block copolymer can be produced by adding a second monomer component to a solution obtained through polymerization of a first monomer component differing from the second monomer component, polymerizing the second monomer component, and further repeating addition and polymerization of monomer components as necessary. The organic solvent that is used as a reaction solvent is not specifically limited and can be selected as appropriate depending on the types of monomers and so forth.

A block copolymer obtained through block copolymerization in this manner is preferably subjected to a coupling reaction using a coupling agent in advance of the subsequently described emulsification step. Through this coupling reaction, it is possible to cause bonding between the ends of diblock structures contained in the block copolymer via the coupling agent and to thereby convert these diblock structures to a triblock structure (i.e., reduce the amount of diblock structures), for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block polymer.

Note that the block copolymer solution that is obtained after the block polymerization and optional coupling reaction described above may be subjected to the subsequently described emulsification step in that form or may be subjected to the emulsification step after the block copolymer has, as necessary, been hydrogenated as previously described.

[Emulsification step]

Although no specific limitations are placed on the method of emulsification in the emulsification step, a method in which phase-inversion emulsification is performed with respect to a preliminary mixture of the block copolymer solution obtained in the block copolymer solution production step described above and an aqueous solution of an emulsifier is preferable, for example. Note that the phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin (product name; produced by Gaulin), and a LAB1000 (produced by SPX FLOW, Inc.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson). Conditions of the emulsification operation performed by the emulsifying/dispersing device (for example, processing temperature and processing time) may be set as appropriate so as to achieve a desired dispersion state without any specific limitations.

A known method may be used to remove organic solvent from the emulsion obtained after phase-inversion emulsification as necessary, for example, so as to yield a water dispersion of a block copolymer that has been formed into particles.

[Grafting step]

Although no specific limitations are placed on the method of graft polymerization in the grafting step, a method in which graft polymerization and cross-linking of the block polymer are caused to proceed concurrently in the presence of a monomer that is to be graft polymerized using a radical initiator such as a redox initiator is preferable, for example. The radical initiator may be any of the redox initiators that were previously described in the "Structure and chemical composition" section as radical initiators that can be used to introduce a structural unit obtained through cross-linking of an aliphatic conjugated diene monomer unit.

The reaction conditions can be adjusted in accordance with the chemical composition of the block polymer, the desired surface acid content, and so forth.

Through the grafting step, it is possible to obtain a water dispersion of a particulate polymer A that includes a backbone portion formed of a block copolymer including an aromatic vinyl monomer unit and an aliphatic conjugated diene monomer unit and that also includes a graft portion. Note that in a case in which the grafting step is performed after the emulsification step (i.e., graft polymerization is performed with respect to a block polymer that has been formed into particles), monomer units introduced by graft polymerization, such as acidic group-containing monomer units, tend to be present more abundantly toward the surface of the particulate polymer A than at the center of the particulate polymer A and are concentrated in a surface layer of the particulate polymer A.

[Other steps]

Other steps besides the above-described block copolymer solution production step, emulsification step, and grafting step may be included in production of the particulate polymer A.

Moreover, it is preferable that a purification step of purifying the water dispersion of the particulate polymer A is included as another step in production of the particulate polymer A. In other words, although the water dispersion of the particulate polymer A that is obtained through the above-described block copolymer solution production step, emulsification step, and grafting step may be used in production of the binder composition in that form, it is preferable that a water dispersion of the particulate polymer A obtained after purification through the subsequently described purification step is used in production of the binder composition.

-Purification step-

In the purification step, the water dispersion of the particulate polymer A that has been obtained through the above-described block copolymer solution production step, emulsification step, and grafting step is purified.

In the previously described grafting step, some of a monomer such as an acidic group-containing monomer that is used as a graft polymerized monomer may undergo polymerization among itself without undergoing graft polymerization with the block copolymer constituting the backbone portion, which may result in the formation of a water-soluble polymer. Consequently, a water-soluble polymer may be contained in the obtained water dispersion of the particulate polymer A. By purifying the water dispersion of the particulate polymer A in the purification step, it is possible to remove at least a portion of the water-soluble polymer that may be contained in the water dispersion of the particulate polymer A and to thereby further increase the peel strength after thermal drying of an electrode formed using the binder composition.

Note that the water-soluble polymer referred to in the present specification may be in the form of a salt (salt of water-soluble polymer). Also note that when a polymer is referred to as "water-soluble" in the present specification, this means that when 0.5 g of the polymer is dissolved in 100 g of water at a temperature of 25°C, insoluble content is less than 1.0 mass%.

The method by which the water dispersion of the particulate polymer A is purified can be a method such as filtration or centrifugal separation, for example, without any specific limitations. Of these methods, filtration is preferable from a viewpoint of removal rate of the water-soluble polymer. Specifically, the water dispersion of the particulate polymer A is preferably purified by the following filtration method. In this method, the water dispersion of the particulate polymer A is loaded into a vessel (feedstock vessel) that is connected to a system including a filtration membrane and is circulated by a metering pump while performing microfiltration. Microfiltration is continued while supplementing water into the feedstock vessel in an amount corresponding to the weight of permeate discharged outside of the filtration membrane, and then the liquid in the feedstock vessel can subsequently be collected as a purified water dispersion of the particulate polymer A.

The water dispersion of the particulate polymer A used in microfiltration can be adjusted to a desired solid content concentration and pH.

Moreover, the system used in microfiltration may be a Microza Pencil Module-type Module Tabletop Filtration Unit PX-02001 produced by Asahi Kasei Corporation or the like.

The pore diameter of the filtration membrane included in the system can be set as appropriate within a range the yields the desired effects.

Moreover, conditions such as the circulation flow rate and the filtration time in microfiltration can be adjusted as appropriate within ranges that yield the desired effects.

<Particulate polymer B>

In an electrode produced by forming an electrode mixed material layer on a current collector using a slurry composition that contains the binder composition, the particulate polymer B holds components contained in the electrode mixed material layer so that these components do not detach from the electrode mixed material layer (i.e., functions as a binder in conjunction with the particulate polymer A described above). Moreover, the particulate polymer B is water-insoluble particles.

<<Structure and chemical composition>>

The particulate polymer B includes an aliphatic conjugated diene monomer unit in a proportion of 70.0 mass% or more and includes a graft portion. More specifically, the particulate polymer B is a graft copolymer that includes an aliphatic conjugated diene monomer unit in a proportion of 70.0 mass% or more and that has a structure in which a graft portion is bonded to a backbone portion. The backbone portion of the particulate polymer B preferably includes an aliphatic conjugated diene monomer unit. Note that the backbone portion of the particulate polymer B may include other repeating units besides an aliphatic conjugated diene monomer unit.

[Aliphatic conjugated diene monomer unit]

Examples of aliphatic conjugated diene monomers that can form an aliphatic conjugated diene monomer unit include, but are not specifically limited to, the same aliphatic conjugated diene monomers as can form an aliphatic conjugated diene monomer unit of the previously described particulate polymer A. Of these aliphatic conjugated diene monomers, 1,3-butadiene and isoprene are preferable, and isoprene is more preferable. One aliphatic conjugated diene monomer may be used individually, or two or more aliphatic conjugated diene monomers may be used in combination in a freely selected ratio.

The proportion constituted by aliphatic conjugated diene monomer units in the particulate polymer B when the amount of all repeating units in the particulate polymer B (total of repeating units in backbone portion and graft portion of particulate polymer B) is taken to be 100 mass% is required to be 70.0 mass% or more, is preferably 80.0 mass% or more, and is preferably 95.0 mass% or less, and more preferably 90.0 mass% or less. When the proportion constituted by aliphatic conjugated diene monomer units in the particulate polymer B is not less than any of the lower limits set forth above, the peel strength after thermal drying of an electrode formed using the binder composition can be sufficiently increased. On the other hand, when the proportion constituted by aliphatic conjugated diene monomer units in the particulate polymer B is not more than any of the upper limits set forth above, the stability of a slurry composition produced using the binder composition can be further increased.

Note that an aliphatic conjugated diene monomer can normally form at least cis-1,4-bonded, trans-1,4-bonded, and vinyl-bonded monomer units through a polymerization reaction. Specifically, 1,3-butadiene, for example, can normally form cis-1,4-bonded, trans-1,4-bonded, and 1,2-bonded (vinyl-bonded) monomer units through a polymerization reaction. Moreover, isoprene, for example, can normally form cis-1,4-bonded and trans-1,4-bonded monomer units as well as 1,2-bonded and 3,4-bonded (vinyl-bonded) monomer units through a polymerization reaction. The proportion constituted by cis-1,4-bonded monomer units among aliphatic conjugated diene monomer units included in the particulate polymer B is even more preferably 90 mol% or more, more preferably 95 mol% or more, even more preferably 98 mol% or more, and further preferably 99 mol% or more, and is preferably 100 mol% or less. When the proportion constituted by cis-1,4-bonded monomer units among aliphatic conjugated diene monomer units (100 mol%) included in the particulate polymer B is not less than the lower limit of any of the ranges set forth above, the peel strength after thermal drying of an electrode formed using the binder composition can be further increased.

[Graft portion]

The particulate polymer B includes a graft portion that is bonded to the backbone portion.

Examples of repeating units that may be included in the graft portion of the particulate polymer B include a (meth)acrylic acid ester monomer unit, an acidic group-containing monomer unit, an aromatic vinyl monomer unit, and a nitrile group-containing monomer unit.

Examples of monomers that can form a (meth)acrylic acid ester monomer unit, an acidic group-containing monomer unit, and an aromatic vinyl monomer unit include the same monomers as can form various monomer units that can be included in the graft portion of the previously described particulate polymer A.

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile.

One of the various monomers described above that can be used to form a repeating unit included in the graft portion of the particulate polymer B may be used individually, or two or more of these monomers may be used in combination. From a viewpoint of further increasing the stability of a slurry composition produced using the binder composition and the peel strength after thermal drying of an electrode, it is preferable that a (meth)acrylic acid ester monomer and a nitrile group-containing monomer are used as monomers for forming repeating units included in the graft portion of the particulate polymer B, more preferable that a (meth)acrylic acid ester monomer is used, and particularly preferable that methyl methacrylate is used.

No specific limitations are placed on the method by which the graft portion is introduced to the backbone portion. For example, a polymer that includes an aliphatic conjugated diene monomer unit may be used as a backbone portion in graft polymerization of a (meth)acrylic acid ester monomer such as previously described, or the like, by a known method so as to obtain a graft copolymer having a structure in which a polymer of a graft portion is bonded to an aliphatic conjugated diene monomer unit of a polymer constituting a backbone portion.

The proportion constituted by monomer units composing the graft portion in the particulate polymer B when the amount of all repeating units in the particulate polymer B (total of repeating units in backbone portion and graft portion of particulate polymer B) is taken to be 100 mass% is preferably 5 mass% or more, and more preferably 10 mass% or more, and is preferably 30 mass% or less, and more preferably 20 mass% or less. When the proportion constituted by monomer units composing the graft portion in the particulate polymer B is not less than any of the lower limits set forth above, the stability of a slurry composition produced using the binder composition can be further increased. On the other hand, when the proportion constituted by monomer units composing the graft portion in the particulate polymer B is not more than any of the upper limits set forth above, the peel strength after thermal drying of an electrode formed using the binder composition can be further increased.

<<Volume-average particle diameter>>

The volume-average particle diameter of the particulate polymer B is preferably 0.60 $\mu$m or more, more preferably 0.70 $\mu$m or more, and even more preferably 0.80 $\mu$m or more, and is preferably 2.50 $\mu$m or less, more preferably 2.00 $\mu$m or less, and even more preferably 1.50 $\mu$m or less. When the volume-average particle diameter of the particulate polymer B is not less than any of the lower limits set forth above, the electrolyte solution injectability of an electrode formed using a slurry composition that contains the binder composition can be increased. Moreover, when the volume-average particle diameter of the particulate polymer B is not more than any of the upper limits set forth above, the specific surface area of the particulate polymer B increases, adhesive ability that can be displayed by the particulate polymer B increases, and, as a result, the peel strength after thermal drying of an electrode formed using the binder composition can be further increased.

Note that the volume-average particle diameter of the particulate polymer B can be adjusted as appropriate. Also note that although the volume-average particle diameter of the particulate polymer B is somewhat influenced by the graft portion, the volume-average particle diameter is, in general, largely dependent on the volume-average particle diameter of the polymer that constitutes the backbone portion. Therefore, in a case in which natural rubber is used as the polymer constituting the backbone portion, for example, the volume-average particle diameter of the particulate polymer B can be adjusted by adjusting the volume-average particle diameter of the natural rubber through sedimentation separation, classification, or the like. Moreover, in a case in which a polymer obtained through synthetic polymerization is used as the polymer constituting the backbone portion, the volume-average particle diameter of the particulate polymer B can be adjusted by adjusting the volume-average particle diameter of the used polymer through polymerization conditions such as the amount of emulsifier that is used.

<<Production method of particulate polymer B>>

A known method can be adopted as the production method of the particulate polymer B without any specific limitations. For example, the particulate polymer B can be obtained by grafting a polymer that constitutes a graft portion with a polymer that constitutes a backbone portion by a known method.

The method by which the graft portion is grafted with the polymer constituting the backbone portion is not specifically limited and may be a method in which a monomer composition containing any the previously described monomers is polymerized on the polymer constituting the backbone portion or a method in which a macromer obtained through polymerization of a monomer composition containing any of the previously described monomers is caused to bond to the polymer constituting the backbone portion. The polymer constituting the backbone portion of the particulate polymer B, which is a graft copolymer, may be a polymer that is produced through synthetic polymerization of a monomer composition containing an aliphatic conjugated diene monomer such as previously described, etc., or may be natural rubber. In particular, it is preferable that the polymer constituting the backbone portion is formed of natural rubber from a viewpoint of further improving the peel strength after thermal drying of an electrode and the cycle characteristics of a secondary battery. In other words, the particulate polymer B is preferably a graft copolymer that is produced by performing graft polymerization with respect to natural rubber.

In a case in which the polymer constituting the backbone portion of the particulate polymer B is produced through synthetic polymerization of a monomer composition, the method of polymerization may be solution polymerization, suspension polymerization, bulk polymerization, emulsion polymerization, or the like, for example, without any specific limitations. Moreover, the polymerization reaction may be addition polymerization such as ionic polymerization, radical polymerization, or living radical polymerization. An emulsifier, dispersant, polymerization initiator, polymerization aid, or the like used in polymerization may be the same as typically used and the amount thereof may also be the same as typically used.

<Content ratio of particulate polymer A and particulate polymer B>

The content of the particulate polymer A in the presently disclosed binder composition when the total content of the particulate polymer A and the particulate polymer B is taken to be 100 mass% is preferably 20.0 mass% or more, more preferably 30.0 mass% or more, even more preferably 35.0 mass% or more, further preferably 50.0 mass% or more, and even further preferably 55.0 mass% or more, and is preferably 80.0 mass% or less, more preferably 75.0 mass% or less, and even more preferably 70.0 mass% or less. When the content of the particulate polymer A is not less than any of the lower limits set forth above, the stability of a slurry composition produced using the binder composition can be further increased, and the peel strength after thermal drying of a formed electrode can also be further improved. On the other hand, when the content of the particulate polymer A is not more than any of the upper limits set forth above, the electrolyte solution injectability of an electrode formed using the binder composition can be increased.

<Solvent>

The presently disclosed binder composition can further contain a solvent such as water. The solvent may be water, an aqueous solution that contains water, or a mixed solution of water and a small amount of an organic solvent. Of these examples, water is preferable as the solvent.

<Other components>

The presently disclosed binder composition can contain components other than those described above (i.e., other components). For example, the binder composition may contain a known particulate binder (styrene butadiene random copolymer, acrylic polymer, etc.) other than the particulate polymers A and B described above.
Moreover, the presently disclosed binder composition may contain a water-soluble polymer that can be formed in the grafting step in production of the particulate polymer A to the extent that the desired effects are obtained.
The binder composition may also contain known additives. Examples of such known additives include antioxidants, defoamers, and dispersants. Examples of antioxidants that can be used include hindered phenol antioxidants such as 4-[[4,6-bis(octylthio)-1,3,5-triazin-2-yl]amino]-2,6-di-tertbutylphenol; and phosphite antioxidants such as 3,9-bis(octadecyloxy)-2,4,8,10-tetraoxa-3,9-diphosphaspiro[5.5]undecane.
Note that one other component may be used individually, or two or more other components may be used in combination in a freely selected ratio.

<Production method of binder composition>

The presently disclosed binder composition can be produced by mixing the particulate polymer A, the particulate polymer B, and other components that are optionally used in the presence of a solvent such as water without any specific limitations. Note that in a case in which dispersion liquids of the particulate polymer A and the particulate polymer B are used in production of the binder composition, liquid contained in these dispersion liquids may be used as the solvent of the binder composition.

(Slurry composition for non-aqueous secondary battery electrode)

The presently disclosed slurry composition is a composition that is for use in formation of an electrode mixed material layer of an electrode. The presently disclosed slurry composition contains the binder composition set forth above and further contains an electrode active material. In other words, the presently disclosed slurry composition contains the previously described particulate polymers A and B, an electrode active material, and the previously described solvent, and optionally further contains other components. The presently disclosed slurry composition has excellent stability as a result of containing the binder composition set forth above. Moreover, the presently disclosed slurry composition can be used to form an electrode having excellent peel strength after thermal drying. By using an electrode that has excellent peel strength after thermal drying in a secondary battery, it is possible to cause the secondary battery to display excellent cycle characteristics.

<Binder composition>

The binder composition is the presently disclosed binder composition that contains the previously described particulate polymers A and B.
No specific limitations are placed on the amount of the binder composition in the slurry composition. For example, the amount of the binder composition can be set as an amount such as to be not less than 0.5 parts by mass and not more than 15 parts by mass in terms of solid content per 100 parts by mass of the electrode active material.

<Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.

Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

Note that one of the positive electrode active materials described above may be used individually, or two or more of the positive electrode active materials described above may be used in combination.

[Negative electrode active material]

A negative electrode active material that is compounded in a negative electrode mixed material layer of a negative electrode in a lithium ion secondary battery may, for example, be a carbon-based negative electrode active material, a metal-based negative electrode active material, or a negative electrode active material that is a combination thereof.

A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitchbased carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and an oxide, sulfide, nitride, silicide, carbide, or phosphide of any of the preceding examples. Moreover, an oxide such as lithium titanate can be used.

Note that one of the negative electrode active materials described above may be used individually, or two or more of the negative electrode active materials described above may be used in combination.

<Other components>

Examples of other components that can be contained in the slurry composition include, but are not specifically limited to, conductive materials and the same components as other components that can be contained in the presently disclosed binder composition. Note that one other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that a solvent such as water used in production of the slurry composition is also inclusive of solvent that was contained in the binder composition. The mixing method is not specifically limited and can be mixing using a typically used stirrer or disperser.

(Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material and components derived from the particulate polymers A and B, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the particulate polymers A and B are present in a particulate form in the slurry composition, the particulate polymers A and B may have a particulate form or any other form in the electrode mixed material layer formed using the slurry composition.

The presently disclosed electrode for a non-aqueous secondary battery has excellent peel strength after thermal drying as a result of the electrode mixed material layer being formed using the slurry composition for a non-aqueous secondary battery electrode set forth above. The presently disclosed electrode for a non-aqueous secondary battery also has excellent peel strength after thermal vacuum drying. By using the electrode having excellent peel strength after thermal drying in a secondary battery, it is possible to cause the secondary battery to display excellent cycle characteristics.

<Production of electrode for non-aqueous secondary battery>

The electrode mixed material layer of the presently disclosed electrode for a non-aqueous secondary battery can be formed by any of the following methods, for example.

(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. The density of the electrode mixed material layer after the aforementioned pressing process can be adjusted as appropriate within a range that yields the desired effects. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent cycle characteristics as a result of being produced by using the electrode for a non-aqueous secondary battery set forth above, which has excellent peel strength after thermal drying, as at least one of the positive electrode and the negative electrode.

Although the following describes, as one example, a case in which the secondary battery is a lithium ion secondary battery, the presently disclosed secondary battery is not limited to the following example.

<Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Separator>

The separator is not specifically limited and can be a separator such as described in JP2012-204303A, for example. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. The electrode for a non-aqueous secondary battery set forth above is used as at least one of the positive electrode and the negative electrode in the presently disclosed non-aqueous secondary battery, and is preferably used as the negative electrode. Prior to being used in production of the secondary battery, the electrode for a non-aqueous secondary battery set forth above may be subjected to drying (thermal drying) under heating at a high temperature of 100°C, for example, with the aim of sufficiently removing water. Moreover, prior to being used in production of the secondary battery, the electrode for a non-aqueous secondary battery set forth above may be subjected to vacuum drying (thermal vacuum drying) under heating at a high temperature of 100°C, for example, with the aim of further removing water. Furthermore, the presently disclosed non-aqueous secondary battery may be provided with an overcurrent preventing device such as a fuse or a PTC device; an expanded metal; or a lead plate as necessary in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, the proportions of monomer units in particulate polymers A and B, the volume-average particle diameter of particulate polymers A and B, the weight-average molecular weight of an aromatic vinyl block region included in a block copolymer constituting a backbone portion of a particulate polymer A, the proportion of cis-1,4-bonded monomer units among aliphatic conjugated diene monomer units included in a particulate polymer B, and the content ratio of a particulate polymer A and a particulate polymer B in a binder composition were measured by methods described below.

Moreover, in the examples and comparative examples, the stability of a slurry composition, the peel strength after thermal vacuum drying and electrolyte solution injectability of an electrode (negative electrode), and the cycle characteristics of a secondary battery were evaluated by methods described below.

<Proportions of monomer units in particulate polymers A and B>

Each water dispersion of a particulate polymer A or B produced in the examples and comparative examples was coagulated in methanol, and then the resultant coagulated material was vacuum dried at a temperature of 100°C for 5 hours to obtain a measurement sample. Next, the intensities of peaks attributed to monomer units contained in the measurement sample were calculated by $^1$H-NMR. The peak intensity attributed to each monomer unit as a proportion relative to the total peak intensity was taken to be the proportion constituted by that monomer unit in the particulate polymer A (or B).

<Volume-average particle diameter of particulate polymers A and B>

The volume-average particle diameter of each particulate polymer A or B produced in the examples and comparative examples was determined as the particle diameter ($\mu$m) at which, in a particle size distribution (by volume) measured by a laser diffraction particle diameter distribution analyzer (produced by Beckman Coulter, Inc.; product name: LS-230) with respect to a water dispersion adjusted to a solid content concentration of 0.1 mass%, cumulative volume calculated from a small diameter end of the distribution reached 50%.

<Weight-average molecular weight of aromatic vinyl block region>

The molecular weight of an aromatic vinyl block region was calculated from the weight-average molecular weight of diblock structures contained in a particulate polymer A and the proportion constituted by aromatic vinyl monomer units in the particulate polymer A. The weight-average molecular weight of block structures contained in the particulate polymer A was measured as a polystyrene-equivalent molecular weight by high-performance liquid chromatography (apparatus: HLC8220 (model no.) produced by Tosoh Corporation). Note that a water dispersion of a particulate polymer A produced in each example or comparative example was used as a measurement sample. Moreover, the measurement was performed using three linked columns (Shodex KF-404HQ (model no.) produced by Showa Denko K.K.; column temperature: 40°C; carrier: tetrahydrofuran at flow rate of 0.35 mL/min) and using a differential refractometer and a UV detector as detectors. Calibration of molecular weight was performed by 12 points for standard polystyrene (produced by Polymer Laboratories Ltd.; standard molecular weight: 500 to 3,000,000). The weight-average molecular weight of diblock structures was determined based on a peak attributed to the diblock structures in a chart obtained by the high-performance liquid chromatography. The weight-average molecular weight of an aromatic vinyl block region was then calculated using a calculation formula expressed by the following formula.

$$[\text{Weight-average molecular weight of aromatic vinyl block region}] =$$
$$[\text{Weight-average molecular weight of diblock structures}] \times [\text{Proportion (\%) of}$$
$$\text{aromatic vinyl monomer units in particulate polymer A}] \div 100$$

<Proportion of cis-1,4-bonded monomer units>

The proportion constituted by cis-1,4-bonded monomer units among aliphatic conjugated diene monomer units included in each particulate polymer B produced in the examples and comparative examples can be determined by an infrared spectroscopy method (IR method) in accordance with JIS K6239.

<Content ratio of particulate polymer A and particulate polymer B in binder composition>

A binder composition produced in each example or comparative example was dried and formed into a film shape to obtain a test specimen. The test specimen was sectioned by a standard method and then the sectioning plane was observed using an atomic force microscope (unit: SPA400; probe station: SPI3800N; cantilever: SI-DF40; measurement mode: SIS-DFM). A square region having a side length of 3 $\mu$m was arbitrarily selected in the sectioning plane of the test specimen observed under the atomic force microscope, and a viscoelastic distribution thereof was measured to perform mapping. An area ratio of regions displaying viscoelasticities corresponding to particulate polymers A and B was determined from the mapping results so as to measure the content ratio, by mass, of the particulate polymer A and the particulate polymer B (particulate polymer A/particulate polymer B).

<Stability of slurry composition>

Various components were prepared in the same way as in production of a slurry composition for a non-aqueous secondary battery negative electrode in each example or comparative example. Moreover, in the same way as in each example or comparative example, a planetary mixer equipped with a disper blade was charged with 100 parts of artificial graphite (capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixture. The viscosity M0 (mPa·s) of this mixture was measured using a B-type viscometer (produced by Toki Sangyo Co., Ltd.; product name: TV-25) under measurement conditions of a measurement temperature of 25°C, a No. 4 measurement rotor, and a rotor speed of 60 rpm.

Meanwhile, 2.0 parts in terms of solid content of a binder composition having the same chemical composition as that produced in each example or comparative example was added to a mixture having the same chemical composition as the mixture for which the viscosity M0 had been measured so as to obtain a solution for measurement of viscosity M1. The solution for measurement of viscosity M1 was loaded into a vessel of 5.5 cm in diameter and 8.0 cm in height and was stirred at a rotation speed of 3,000 rpm for 10 minutes using a TK Homo Disper (produced by PRIMIX Corporation; disper blade diameter: 40 mm). The viscosity M1 (mPa·s) of the slurry composition after stirring was measured. Next, $\Delta M = M1/M0$ (times) was calculated, and the stability of the slurry composition was evaluated in accordance with the following standard. A smaller value indicates that the slurry composition has higher stability.

A: $\Delta M \leq 1.0$ times
B: 1.0 times $< \Delta M < 1.2$ times
C: 1.2 times $\leq \Delta M < 1.5$ times
D: 1.5 times $\leq \Delta M$

<Peel strength after thermal vacuum drying of electrode>

A negative electrode produced in each example or comparative example was cut out as a rectangle of 100 mm in length and 10 mm in width to obtain a test specimen. The test specimen was placed inside a vacuum drying oven (produced by Yamato Scientific Co., Ltd.; model: DP23) and was vacuum dried under heating at 100°C for 10 hours. The test specimen that had undergone thermal vacuum drying was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner, an average value thereof was determined, and the average value was taken to be the peel strength after thermal vacuum drying of the electrode and was evaluated in accordance with the following standard.

A: 25 N/m or more
B: Not less than 20 N/m and less than 25 N/m
C: Not less than 15 N/m and less than 20 N/m
D: Less than 15 N/m

<Electrolyte solution injectability>

The negative electrode mixed material layer-side of a negative electrode web produced in each example or comparative example was roll pressed with a line pressure of 14 t (tons) in an environment having a temperature of 25 $\pm$ 3°C so as to adjust the electrode mixed material layer density to 1.75 g/cm$^3$. The produced negative electrode for a secondary battery was cut out as a circle of 16 mm in diameter, and then 1 $\mu$L of propylene carbonate (reagent produced by Kishida Chemical Co., Ltd.) was dripped onto the surface of the negative electrode mixed material layer. The time taken from dripping until the droplet of propylene carbonate on the negative electrode penetrated into the negative electrode mixed material layer (penetration time) was visually measured and was evaluated by the following standard. A shorter penetration time indicates better affinity between the negative electrode and propylene carbonate that is contained in a typical electrolyte solution, and thus indicates that the negative electrode (electrode) has better electrolyte solution injectability during production of a secondary battery.

A: Penetration time of less than 110 s
B: Penetration time of not less than 110 s and less than 130 s
C: Penetration time of not less than 130 s and less than 150 s
D: Penetration time of 150 s or more

<Cycle characteristics>

A secondary battery produced in each example or comparative example was left at rest in a 25°C environment for 24 hours. A charge/discharge operation of charging to 4.35 V at 1C and discharging to 3.0 V at 1C was then performed in a 25°C environment, and the initial capacity C'0 was measured. In addition, CC-CV charging (upper limit cell voltage 4.35 V) by a 1C constantcurrent method and CC discharging to a cell voltage of 3.00 V by a 1C constantcurrent method were performed in a 45°C environment. This charging and discharging was repeated, and the capacity C'1 after 300 cycles was measured. A capacity maintenance rate expressed by $\Delta C' = (C'1/C'0) \times 100(\%)$ was evaluated in accordance with the following standard. A higher value for the capacity maintenance rate indicates that the secondary battery has better cycle characteristics.

A: $\Delta C' \geq 80\%$
B: $75\% \leq \Delta C' < 80\%$
C: $70\% \leq \Delta C' < 75\%$
D: $\Delta C' < 70\%$

(Example 1)

<Production of particulate polymer A>

<<Block copolymer cyclohexane solution production step>>

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at 40°C while 1806.5 mmol of n-butyllithium as a polymerization initiator was added thereto, and then 1 hour of polymerization was performed under heating at 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%.

Next, 722.6 mmol of dichlorodimethylsilane as a coupling agent was added into the pressure-resistant reactor and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block copolymer.

The collected dried product was dissolved in cyclohexane to produce a block copolymer cyclohexane solution having a block copolymer concentration of 5.0%.

<<Emulsification step>>

Sodium alkylbenzene sulfonate was dissolved in deionized water to produce a 0.15% aqueous solution.

After loading 1,000 g of the obtained block copolymer solution and 1,400 g of the obtained aqueous solution into a tank, preliminary mixing thereof was performed by stirring to obtain a preliminary mixture. Next, the preliminary mixture was transferred from the tank to a high-pressure emulsifying/dispersing device "LAB1000" (produced by SPX FLOW, Inc.) using a metering pump and was circulated (number of passes: 5) so as to obtain an emulsion in which the preliminary mixture had undergone phase-inversion emulsification.

Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.

Finally, the upper layer portion was filtered through a 100-mesh screen to obtain a water dispersion (block copolymer latex) containing a block copolymer that had been formed into particles.

<<Graft polymerization and cross-linking step>>

Distilled water was added to dilute the obtained block copolymer latex such that the amount of water was 850 parts relative to 100 parts (in terms of solid content) of the particles of the block copolymer. The diluted block copolymer latex was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as an acidic group-containing monomer and 15 parts of distilled water. The diluted methacrylic acid solution was added over 30 minutes into the polymerization reactor that had been heated to 30°C so as to add 4 parts of methacrylic acid relative to 100 parts of the block copolymer.

A separate vessel was used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at 30°C for 1 hour and then at 70°C for 2 hours. In this manner, cross-linking of the block copolymer was performed and methacrylic acid was graft polymerized with the block copolymer that had been formed into particles to yield a water dispersion of a particulate polymer A. The polymerization conversion rate was 99%.

<<Purification step>>

The obtained water dispersion of the particulate polymer A was diluted to a solid content concentration of 10% through addition of deionized water. The diluted water dispersion of the particulate polymer was then adjusted to pH 8.0 through addition of 5% sodium hydroxide aqueous solution. After loading 1,500 g of the pH adjusted binder composition into a vessel (feedstock vessel) connected to the following system, the binder composition was subjected to microfiltration under conditions indicated below while being circulated using a metering pump.

System: Microza Pencil Module-type Module Tabletop Filtration Unit PX-02001 (produced by Asahi Kasei Corporation)

Filtration membrane: Microza USP-043 (pore diameter: 0.1 μm)

Circulation flow rate: 1,000 g/min

The microfiltration was continued for 30 hours while supplementing water into the feedstock vessel in an amount corresponding to the weight of permeate discharged outside of the system (outside of the filtration membrane), and then liquid inside the feedstock vessel was collected as a purified water dispersion of the particulate polymer A.

<Production of particulate polymer B>

A vessel X was charged with 15 parts of methyl methacrylate as a (meth)acrylic acid ester monomer and 2.5 parts of sodium lauryl sulfate (used after dilution to 20% with deionized water) as an emulsifier and was stirred to perform emulsification. Thereafter, 85 parts in terms of solid content of a natural rubber latex containing particles of natural rubber (NR) having a volume-average particle diameter of 0.88 $\mu$m (produced by Musashino Chemical Corporation; product name: LA Type; solid content concentration: 62%; isoprene unit content in polymer composing natural rubber particles in latex: 95% or more) was added into the vessel X, was left for 2 hours, and was subsequently stirred. Once sufficient stirring had been performed, 0.6 parts of tetraethylenepentamine and 0.6 parts of t-butyl hydroxide were further added into the vessel X as polymerization initiators so as to initiate graft polymerization. The reaction temperature was maintained at 28°C. Once 9 hours had passed from the start of the graft polymerization, the polymerization addition rate was confirmed to be at least 97% and then the reaction was terminated to yield a water dispersion (solid content concentration: 40%) of a particulate polymer B having a graft portion formed of only (meth)acrylic acid ester monomer units introduced into particles of natural rubber serving as a polymer of a backbone portion.

<Production of binder composition for non-aqueous secondary battery negative electrode>

The water dispersion containing the particulate polymer A and the water dispersion containing the particulate polymer B that were obtained as described above were loaded into a vessel such that the mixing ratio of the particulate polymer A and the particulate polymer B was 70:30 (by mass) in order to obtain a mixture. The obtained mixture was stirred using a stirrer (produced by SHINTO Scientific Co., Ltd.; product name: Three-One Motor) for 1 hour to obtain a binder composition for a negative electrode. Upon verification by the previously described method, the content ratio of the particulate polymer A and the particulate polymer B in the binder composition was confirmed to be the same as the mixing ratio.

<Production of slurry composition for non-aqueous secondary battery negative electrode>

A planetary mixer was charged with 97 parts of natural graphite (theoretical capacity: 360 mAh/g) as a negative electrode active material and 1 part (in terms of solid content) of carboxymethyl cellulose (CMC) as a thickener. These materials were diluted to a solid content concentration of 60% with deionized water and were subsequently kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. Deionized water was added to adjust the viscosity (measured by B-type viscometer; temperature: 25°C; rotor speed: 60 rpm) to 3,000 $\pm$ 500 mPa·s and thereby produce a slurry composition for a negative electrode.

<Formation of negative electrode>

The slurry composition for a negative electrode was applied onto the surface of electrolytic copper foil of 15 $\mu$m in thickness serving as a current collector by a comma coater such as to have a coating weight of 11 $\pm$ 0.5 mg/cm$^2$. The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.

The negative electrode mixed material layer-side of the produced negative electrode web was subsequently roll pressed in an environment having a temperature of 25 $\pm$ 3°C to obtain a negative electrode having a negative electrode mixed material layer density of 1.60 g/cm$^3$.

<Formation of positive electrode>

A planetary mixer was charged with 97 parts of an active material NMC532 (LiNi$_{5/10}$Co$_{2/10}$Mn$_{3/10}$O$_2$) based on a lithium complex oxide of Co-Ni-Mn as a positive electrode active material, 1 part of acetylene black (produced by Denka Company Limited; product name: HS-100) as a conductive material, and 2 parts (in terms of solid content) of polyvinylidene fluoride (produced by Kureha Corporation; product name: #7208) as a binder, and was used to mix these materials. In addition, N-methyl-2-pyrrolidone (NMP) was gradually added as an organic solvent and was mixed therewith by stirring at a temperature of 25 $\pm$ 3°C and a rotation speed of 25 rpm to yield a slurry composition for a positive electrode having a viscosity (measured by B-type viscometer; temperature: 25 ± 3°C; rotor: M4; rotor speed: 60 rpm) of 3,600 mPa·s.

The obtained slurry composition for a positive electrode was applied onto aluminum foil of 20 μm in thickness serving as a current collector by a comma coater such as to have a coating weight of 20 ± 0.5 mg/cm². The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.

The positive electrode mixed material layer-side of the produced positive electrode web was subsequently roll pressed in an environment having a temperature of 25 ± 3°C to obtain a positive electrode having a positive electrode mixed material layer density of 3.20 g/cm³.

<Preparation of separator>

A separator made of a single layer of polypropylene (produced by Celgard, LLC.; product name: Celgard 2500) was prepared as a separator composed of a separator substrate.

<Production of lithium ion secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, an LiPF$_6$ solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery.

Various measurements and evaluations were performed by the previously described methods with respect to the particulate polymers A and B, binder composition, slurry composition, electrode (negative electrode), secondary battery, and so forth obtained as described above. The results are shown in Table 1.

(Example 2)

Various operations, measurements, and evaluations were performed in the same way as in Example 1 with the exception that in production of the particulate polymer A in Example 1, 70.0 kg of isoprene was used instead of 70.0 kg of 1,3-butadiene as an aliphatic conjugated diene monomer in the block copolymer cyclohexane solution production step. The results are shown in Table 1.

(Example 3)

Various operations, measurements, and evaluations were performed in the same way as in Example 1 with the exception that in production of the particulate polymer B in Example 1, the used amount of methyl methacrylate as a (meth)acrylic acid ester monomer was changed from 15 parts to 25 parts, and the used amount of the natural rubber latex was changed from 85 parts to 75 parts (in terms of solid content). The results are shown in Table 1.

(Example 4)

Various operations, measurements, and evaluations were performed in the same way as in Example 1 with the exception that in production of the particulate polymer B in Example 1, 85 parts (in terms of solid content) of a latex containing particles of polyisoprene (IR) produced by the following method was used instead of 85 parts (in terms of solid content) of the natural rubber latex. The results are shown in Table 1.

<Production of latex containing polyisoprene (IR) particles>

Isoprene rubber (produced by Zeon Corporation; product name: Nipol IR2200) was dissolved in toluene to prepare an isoprene rubber solution of 10% in concentration.

Next, a mixture of sodium linear alkylbenzene sulfonate, sodium alkyl polyoxyethylene sulfonate, and sodium alkyl polyoxyethylene sulfosuccinate mixed in a ratio of 1:1:1 was dissolved in deionized water to produce an aqueous solution having a total solid content concentration of 1.5%.

A tank was charged with 500 g of the isoprene rubber solution and 500 g of the aqueous solution, and preliminary mixing of these materials was performed by stirring. The resultant preliminary mixture was then transferred from the tank to a Milder (produced by Pacific Machinery & Engineering Co., Ltd.; product name: MDN303V) by a metering pump at a rate of 100 g/min and was stirred at a rotation speed of 20,000 rpm to cause emulsification.

Next, toluene in the resultant emulsion was evaporated under reduced pressure in a rotary evaporator. The emulsion was subsequently left to separate for 1 day in a chromatographic column equipped with a stop-cock, and a lower layer portion was removed after separation to perform concentration.

An upper layer portion was then filtered through a 100-mesh screen to produce a latex containing particles of polyisoprene (IR). The obtained polyisoprene latex had a solid content concentration of 20% and a volume-average particle diameter of 0.88 $\mu$m.

(Example 5)

Various operations, measurements, and evaluations were performed in the same way as in Example 1 with the exception that in production of the particulate polymer B in Example 1, 15 parts of acrylonitrile as a nitrile group-containing monomer was used instead of 15 parts of methyl methacrylate as a (meth)acrylic acid ester monomer. The results are shown in Table 1.

(Example 6)

Various operations, measurements, and evaluations were performed in the same way as in Example 1 with the exception that in production of the binder composition for a non-aqueous secondary battery negative electrode in Example 1, the mixing ratio of the particulate polymer A and the particulate polymer B was changed from 70:30 to 50:50 (by mass). The results are shown in Table 1.

(Example 7)

Various operations, measurements, and evaluations were performed in the same way as in Example 1 with the exception that in production of the binder composition for a non-aqueous secondary battery negative electrode in Example 1, the mixing ratio of the particulate polymer A and the particulate polymer B was changed from 70:30 to 30:70 (by mass). The results are shown in Table 1.

(Example 8)

Various operations, measurements, and evaluations were performed in the same way as in Example 1 with the exception that in production of the particulate polymer A in Example 1, the used amount of styrene as an aromatic vinyl monomer was changed from 30.0 kg to 15.0 kg and the used amount of 1,3-butadiene as an aliphatic conjugated diene monomer was changed from 70.0 kg to 85.0 kg in the block copolymer cyclohexane solution production step. The results are shown in Table 1.

(Example 9)

Various operations, measurements, and evaluations were performed in the same way as in Example 1 with the exception that in production of the particulate polymer A in Example 1, the concentration of the block copolymer solution used in the emulsification step was changed from 5.0% to 2.5% and the concentration of the sodium alkylbenzene sulfonate aqueous solution used in the emulsification step was changed from 0.15% to 0.075% so as to change the volume-average particle diameter of the obtained particulate polymer A from 0.5 $\mu$m to 0.2 $\mu$m. The results are shown in Table 1.

(Example 10)

Various operations, measurements, and evaluations were performed in the same way as in Example 1 with the exception that in production of the particulate polymer A in Example 1, the concentration of the block copolymer solution used in the emulsification step was changed from 5.0% to 10.0% and the concentration of the sodium alkylbenzene sulfonate aqueous solution used in the emulsification step was changed from 0.15% to 0.3% so as to change the volume-average particle diameter of the obtained particulate polymer A from 0.5 $\mu$m to 1.0 $\mu$m, and that in production of the particulate polymer B in Example 1, 85 parts (in terms of solid content) of a latex containing particles of polyisoprene (IR) produced by the following method was used instead of 85 parts (in terms of solid content) of the natural rubber latex containing particles of natural rubber having a volume-average particle diameter of 0.88 $\mu$m. The results are shown in Table 1.

<Production of latex containing polyisoprene (IR) particles>

Isoprene rubber (produced by Zeon Corporation; product name: Nipol IR2200) was dissolved in toluene to prepare an isoprene rubber solution of 10% in concentration.

Next, a mixture of sodium linear alkylbenzene sulfonate, sodium alkyl polyoxyethylene sulfonate, and sodium alkyl polyoxyethylene sulfosuccinate mixed in a ratio of 1:1:1 was dissolved in deionized water to produce an aqueous solution having a total solid content concentration of 1.5%.

A tank was charged with 500 g of the isoprene rubber solution and 500 g of the aqueous solution, and preliminary mixing of these materials was performed by stirring. The resultant preliminary mixture was then transferred from the tank to a Milder (produced by Pacific Machinery & Engineering Co., Ltd.; product name: MDN303V) by a metering pump at a rate of 100 g/min and was stirred at a rotation speed of 20,000 rpm to cause emulsification.

Next, toluene in the resultant emulsion was evaporated under reduced pressure in a rotary evaporator. The emulsion was subsequently left to separate for 1 day in a chromatographic column equipped with a stop-cock, and a lower layer portion after separation was collected.

The lower layer portion was then filtered through a 100-mesh screen to produce a latex containing particles of polyisoprene (IR). The obtained polyisoprene latex had a solid content concentration of 10% and a volume-average particle diameter of 0.60 $\mu$m.

(Example 11)

Various operations, measurements, and evaluations were performed in the same way as in Example 1 with the exception that in production of the particulate polymer A in Example 1, the additive amount of n-butyllithium as a polymerization initiator was changed from 1806.5 mmol to 3474.0 mmol. The results are shown in Table 1.

(Comparative Example 1)

Various operations, measurements, and evaluations were performed in the same way as in Example 1 with the exception that the graft polymerization and cross-linking step and the purification step were not performed in production of the particulate polymer A in Example 1 and that the water dispersion containing a block copolymer formed into particles that was obtained after the emulsification step was used as a water dispersion containing a particulate polymer A in production of the binder composition for a non-aqueous secondary battery negative electrode. The results are shown in Table 1.

(Comparative Example 2)

Various operations, measurements, and evaluations were performed in the same way as in Example 1 with the exception that production of the particulate polymer B in Example 1 was not performed and that a latex containing particles of styrene-butadiene rubber (SBR) produced by the following method was used as a particulate polymer B. The results are shown in Table 1.

<Production of latex containing styrene-butadiene rubber (SBR) particles>

A mixture of 65 parts of 1,3-butadiene as an aliphatic conjugated diene monomer, 20 parts of styrene as an aromatic vinyl monomer, 15 parts of methyl methacrylate as a (meth)acrylic acid ester monomer, 0.3 parts of tert-dodecyl mercaptan as a chain transfer agent, and 1.5 parts of sodium dodecylbenzenesulfonate as an emulsifier was loaded into a vessel A. Addition of the mixture from the vessel A to a pressure-resistant vessel B was initiated, and, simultaneously thereto, addition of 1 part of potassium persulfate to the pressure-resistant vessel B as a polymerization initiator was initiated so as to initiate polymerization. A reaction temperature of 75°C was maintained. Addition of the total amount of the above-described monomers was completed 5 hours and 30 minutes after the start of polymerization. Heating was subsequently performed to 85°C, and a reaction was carried out for 6 hours.

The reaction was quenched by cooling at the point at which the polymerization conversion rate reached 97% to yield a mixture containing a particulate polymer. The mixture containing the particulate polymer was adjusted to pH 8 through addition of 5% sodium hydroxide aqueous solution. Unreacted monomer was subsequently removed through thermal-vacuum distillation. Cooling was then performed to yield a water dispersion (solid content concentration: 40%) containing a particulate polymer B.

The obtained particulate polymer B had a volume-average particle diameter of 0.15 $\mu$m.

(Comparative Example 3)

Various operations, measurements, and evaluations were performed in the same way as in Example 1 with the exception that production of the particulate polymer B in Example 1 was not performed and that a natural rubber latex containing particles of natural rubber (NR) having a volume-average particle diameter of 0.88 $\mu$m was used as a water dispersion containing a particulate polymer B in production of the binder composition for a non-aqueous secondary battery negative electrode. The results are shown in Table 1.

In Table 1, shown below:

"SBS" indicates block copolymer having styrene region-butadiene region-styrene region structure;
"SIS" indicates block copolymer having styrene region-isoprene region-styrene region structure;
"NR" indicates natural rubber;
"IR" indicates polyisoprene;
"SBR" indicates styrene-butadiene rubber;
"BD" indicates 1,3-butadiene units;
"IP" indicates isoprene units;
"ST" indicates styrene units;
"MAA" indicates methacrylic acid units;
"MMA" indicates methyl methacrylate units; and
"AN" indicates acrylonitrile units.

Table 1

| | | | Example 1 | Example 2 | Example 3 | Example 4 | Example 5 | Example 6 | Example 7 | Example 8 | Example 9 | Example 10 | Example 11 | Comarative Example 1 | Comarative Example 2 | Comarative Example 3 |
|---|---|---|---|---|---|---|---|---|---|---|---|---|---|---|---|---|
| Particulate polymer A | | Type of block copolymer of backbone portion | SBS | SIS | SBS | SBS | SBS | SBS | SBS | SBS | SBS | SBS | SBS | SBS | SBS | SBS |
| | Aliphatic conjugated diene monomer units | Type | BD | IP | BD | BD | BD | BD | BD | BD | BD | BD | BD | BD | BD | BD |
| | | Proportion [%] | 66.5 | 66.5 | 66.5 | 66.5 | 66.5 | 66.5 | 66.5 | 80.75 | 66.5 | 66.5 | 66.5 | 70 | 66.5 | 66.5 |
| | Aromatic vinyl monomer units | Type | ST | ST | ST | ST | ST | ST | ST | ST | ST | ST | ST | ST | ST | ST |
| | | Proportion [%] | 28.5 | 28.5 | 28.5 | 28.5 | 28.5 | 28.5 | 28.5 | 14.25 | 28.5 | 28.5 | 28.5 | 30 | 28.5 | 28.5 |
| | Weight-average molecular weight of aromatic vinyl block region | | 25,000 | 25,000 | 25,000 | 25,000 | 25,000 | 25,000 | 25,000 | 25,000 | 25,000 | 25,000 | 13,000 | 25,000 | 25,000 | 25,000 |
| | Monomer units composing graft portion | Type | MAA | MAA | MAA | MAA | MAA | MAA | MAA | MAA | MAA | MAA | MAA | | MAA | MAA |
| | | Proportion [%] | 5 | 5 | 5 | 5 | 5 | 5 | 5 | 5 | 5 | 5 | 5 | | 5 | 5 |

(continued)

| | | | | Example 1 | Example 2 | Example 3 | Example 4 | Example 5 | Example 6 | Example 7 | Example 8 | Example 9 | Example 10 | Example 11 | Comarative Example 1 | Comarative Example 2 | Comarative Example 3 |
|---|---|---|---|---|---|---|---|---|---|---|---|---|---|---|---|---|---|
| Binder composition for non-aqueous secondary battery electrode | | Volume-average particle diameter [μm] | | 0.5 | 0.5 | 0.5 | 0.5 | 0.5 | 0.5 | 0.5 | 0.5 | 0.2 | 1.0 | 0.5 | 0.5 | 0.5 | 0.5 |
| | Particulate polymer B | Type of latex used as backbone portion in graft copolymenzation | | NR | NR | NR | IR | NR | NR | NR | NR | NR | IR | NR | NR | SBR | NR |
| | | Aliphatic conjugated diene monomer units | Type | IP | IP | IP | IP | IP | IP | IP | IP | IP | IP | IP | IP | BD | IP |
| | | | Proportion of cis-1,4-bonded monomer units [mol%] | 100 | 100 | 100 | 98 | 100 | 100 | 100 | 100 | 100 | 98 | 100 | 100 | 20 | 100 |
| | | | Proportion [%] | 85 | 85 | 75 | 85 | 85 | 85 | 85 | 85 | 85 | 85 | 85 | 85 | 65 | 100 |
| | | Aromatic vinyl monomer units | Type | - | - | - | - | - | - | - | - | - | - | - | - | ST | - |
| | | | Proportion [%] | - | - | - | - | - | - | - | - | - | - | - | - | 20 | - |
| | | Acidic group-containing monomer units | Type | - | - | - | - | - | - | - | - | - | - | - | - | MMA | - |
| | | | Proportion [%] | - | - | - | - | - | - | - | - | - | - | - | - | 15 | - |

(continued)

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|---|---|
| | | Monomer units composing graft portion | Type | MMA | MMA | MMA | MMA | AN | MMA | MMA | MMA | MMA | MMA | MMA | MMA | | - |
| | | | Proportion [%] | 15 | 15 | 25 | 15 | 15 | 15 | 15 | 15 | 15 | 15 | 15 | 15 | - | - |
| | | Volume average particle diameter [μm] | | 1.0 | 1.0 | 1.0 | 1.0 | 1.0 | 1.0 | 1.0 | 1.0 | 1.0 | 0.6 | 1.0 | 1.0 | 0.15 | 0.88 |
| | Content ratio (particulate polymer A/particulate polymer B) | | | 70/30 | 70/30 | 70/30 | 70/30 | 70/30 | 50/50 | 30/70 | 70/30 | 70/30 | 70/30 | 70/30 | 70/30 | 70/30 | 70/30 |
| Evaluations | Stability of slurry composition | | | A | A | A | A | B | A | B | A | A | A | A | C | A | C |
| | Peel strength after thermal vacuum drying of electrode | | | A | B | B | B | B | B | B | B | A | B | B | C | C | C |
| | Electrolyte solution injectability of electrode | | | A | A | A | A | A | A | A | A | B | A | A | A | C | A |
| | Cycle characteristics of secondary battery | | | A | B | B | B | B | B | B | B | A | B | B | C | C | C |

It can be seen from Table 1 that a slurry composition for a non-aqueous secondary battery electrode having excellent stability can be produced and an electrode for a non-aqueous secondary battery having excellent peel strength after thermal vacuum drying can be formed using the binder compositions of Examples 1 to 11, which each contain a particulate polymer A that includes a backbone portion formed of a block copolymer including an aromatic vinyl monomer unit and an aliphatic conjugated diene monomer unit and that also includes a graft portion and a particulate polymer B that includes an aliphatic conjugated diene monomer unit in a proportion that is not less than a specific value and that also includes a graft portion.

On the other hand, it can be seen that the stability of a produced slurry composition is poor and the peel strength after thermal vacuum drying of a formed electrode is also poor when using the binder composition of Comparative Example 1 in which a particulate polymer that is formed of only a block copolymer including an aromatic vinyl monomer unit and an aliphatic conjugated diene monomer unit and that does not include a graft portion is used instead of the above-described particulate polymer A.

It can also be seen that although the stability of a produced slurry composition is good, the peel strength after thermal vacuum drying of a formed electrode is poor when using the binder composition of Comparative Example 2 in which particles of styrene-butadiene rubber (SBR) are used instead of the above-described particulate polymer B.

It can also be seen that the stability of a produced slurry composition is poor and the peel strength after thermal vacuum drying of a formed electrode is also poor when using the binder composition of Comparative Example 3 in which, instead of the above-described particulate polymer B, an aliphatic conjugated diene monomer unit is included in a proportion that is not less than a specific value but a graft portion is not included.

INDUSTRIAL APPLICABILITY

According to the present disclosure, it is possible to provide a binder composition for a non-aqueous secondary battery electrode with which it is possible to form a slurry composition for a non-aqueous secondary battery electrode having excellent stability and an electrode for a non-aqueous secondary battery having excellent peel strength after thermal drying. Moreover, according to the present disclosure, it is possible to provide a slurry composition for a non-aqueous secondary battery electrode that has excellent stability and that can form an electrode for a non-aqueous secondary battery having excellent peel strength after thermal drying.

Furthermore, according to the present disclosure, it is possible to provide an electrode for a non-aqueous secondary battery that has excellent peel strength after thermal drying.

Also, according to the present disclosure, it is possible to provide a non-aqueous secondary battery that includes this electrode for a non-aqueous secondary battery.

**Claims**

1. A binder composition for a non-aqueous secondary battery electrode comprising a particulate polymer A and a particulate polymer B, wherein

    the particulate polymer A includes: a backbone portion formed of a block copolymer that includes an aromatic vinyl monomer unit and an aliphatic conjugated diene monomer unit; and a graft portion, and
    the particulate polymer B includes an aliphatic conjugated diene monomer unit in a proportion of 70 mass% or more and includes a graft portion.

2. The binder composition for a non-aqueous secondary battery electrode according to claim 1, wherein content of the particulate polymer A is not less than 20.0 mass% and not more than 80.0 mass% when total content of the particulate polymer A and the particulate polymer B is taken to be 100 mass%.

3. The binder composition for a non-aqueous secondary battery electrode according to claim 1 or 2, wherein proportional content of aromatic vinyl monomer units in the particulate polymer A is not less than 10.0 mass% and not more than 50.0 mass%.

4. The binder composition for a non-aqueous secondary battery electrode according to any one of claims 1 to 3, wherein the block copolymer includes a block region formed of aromatic vinyl monomer units, and the block region has a weight-average molecular weight of 15,000 or more.

5. The binder composition for a non-aqueous secondary battery electrode according to any one of claims 1 to 4, wherein the graft portion of the particulate polymer A includes a carboxy group-containing monomer unit.

**6.** The binder composition for a non-aqueous secondary battery electrode according to any one of claims 1 to 5, wherein the particulate polymer A has a volume-average particle diameter of not less than 0.1 $\mu$m and not more than 2.0 $\mu$m.

**7.** The binder composition for a non-aqueous secondary battery electrode according to any one of claims 1 to 6, wherein cis-1,4-bonded monomer units are included in a proportion of 90 mol% or more among aliphatic conjugated diene monomer units included in the particulate polymer B.

**8.** The binder composition for a non-aqueous secondary battery electrode according to any one of claims 1 to 7, wherein the graft portion of the particulate polymer B includes either or both of a (meth)acrylic acid ester monomer unit and a nitrile group-containing monomer unit.

**9.** The binder composition for a non-aqueous secondary battery electrode according to any one of claims 1 to 8, wherein the particulate polymer B has a volume-average particle diameter of not less than 0.6 $\mu$m and not more than 2.5 $\mu$m.

**10.** A slurry composition for a non-aqueous secondary battery electrode comprising: an electrode active material; and the binder composition for a non-aqueous secondary battery electrode according to any one of claims 1 to 9.

**11.** An electrode for a non-aqueous secondary battery comprising an electrode mixed material layer formed using the slurry composition for a non-aqueous secondary battery electrode according to claim 10.

**12.** A non-aqueous secondary battery comprising the electrode for a non-aqueous secondary battery according to claim 11.

<div align="center"><b>INTERNATIONAL SEARCH REPORT</b></div>

| | International application No. |
|---|---|
| | PCT/JP2020/035847 |

A. CLASSIFICATION OF SUBJECT MATTER
C08F 279/02(2006.01)i; C08F 287/00(2006.01)i; C08L 51/04(2006.01)i; H01M 4/13(2010.01)i; H01M 4/62(2006.01)i
FI: H01M4/62 Z; H01M4/13; C08L51/04; C08F287/00; C08F279/02

According to International Patent Classification (IPC) or to both national classification and IPC

B. FIELDS SEARCHED

Minimum documentation searched (classification system followed by classification symbols)
C08F279/02; C08F287/00; C08L51/04; H01M4/13; H01M4/62

Documentation searched other than minimum documentation to the extent that such documents are included in the fields searched
Published examined utility model applications of Japan   1922–1996
Published unexamined utility model applications of Japan   1971–2020
Registered utility model specifications of Japan   1996–2020
Published registered utility model applications of Japan   1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2019/087827 A1 (ZEON CORP.) 09 May 2019 (2019-05-09) examples, columns | 1,3-6,9-12<br>2,7-8 |
| A | WO 2019/039560 A1 (ZEON CORP.) 28 February 2019 (2019-02-28) entire text | 1-12 |
| A | WO 2017/141791 A1 (ZEON CORP.) 24 August 2017 (2017-08-24) entire text | 1-12 |
| A | WO 2018/173717 A1 (ZEON CORP.) 27 September 2018 (2018-09-27) entire text | 1-12 |
| A | JP 2011-14387 A (ZEON CORP.) 20 January 2011 (2011-01-20) entire text | 1-12 |

☐   Further documents are listed in the continuation of Box C.      ☒   See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 30 November 2020 (30.11.2020) | 08 December 2020 (08.12.2020) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**
Information on patent family members

| International application No. |
|---|
| PCT/JP2020/035847 |

| Patent Documents referred in the Report | Publication Date | Patent Family | Publication Date |
|---|---|---|---|
| WO 2019/087827 A1 | 09 May 2019 | (Family: none) | |
| WO 2019/039550 A1 | 28 Feb. 2019 | CN 111066185 A whole document | |
| WO 2017/141791 A1 | 24 Aug. 2017 | US 2019/0044148 A1 whole document EP 3419039 A1 CN 108604685 A KR 10-2018-0111829 A | |
| WO 2018/173717 A1 | 27 Sep. 2018 | EP 3609004 A1 whole document CN 110402510 A KR 10-2019-0125986 A | |
| JP 2011-14387 A | 20 Jan. 2011 | (Family: none) | |

Form PCT/ISA/210 (patent family annex) (January 2015)

**REFERENCES CITED IN THE DESCRIPTION**

**Patent documents cited in the description**

- WO 2017141791 A1

- JP 2012204303 A